# EUROPEAN PATENT SPECIFICATION

(11) **EP 0 405 380 B1**
(45) Date of publication and mention of the grant of the patent: **01.09.1993**
(21) Application number: 90111978.4
(22) Date of filing: 25.06.1990
(51) Int. Cl.: B60H 1/34, F16C 11/04, F24F 13/075

(54) **Device for rotatably supporting manually orientatable elements, particularly for diffuser grilles in motor vehicle air-conditioning systems**
Vorrichtung zur Drehunterstützung eines von Hand verstellbaren Teiles, insbesondere für Verteilergrille in Kraftfahrzeugklimaanlagen
Support rotatif pour éléments orientables à la main, en particulier pour grilles de diffuseur dans les systèmes de climatisation de véhicules à moteur

(30) Priority: 29.06.1989 IT 6753589
(43) Date of publication of application: 02.01.1991
(73) Proprietor: FOGGINI PROGETTI S.r.l., I-10092 Beinasco Torino (IT)
(72) Inventor: Davico, Claudio, I-10095 Grugliasco (Torino) (IT); Giorgini, Gerardo, I-10024 Moncalieri (Torino) (IT); Vercesi, Piercarlo, I-27100 Pavia (IT)
(74) Representative: Modiano, Guido, Dr.-Ing.

(56) References cited:
- WO-A-82/00181
- DE-A- 3 707 397
- FR-A- 1 043 718
- FR-A- 1 267 652
- GB-A- 2 092 221
- US-A- 3 921 225

## Description

The present invention relates to a device for the braked rotational support of generic manually orientatable elements, particularly for supporting orientatable diffuser grilles in motor vehicle air-conditioning and ventilation systems.

The rotation of manually orientatable elements is generally subjected to a braking torque which has the purpose of making the orientation manoeuvre more gradual and correct on one hand and of ensuring maintenance of the chosen adjustment position on the other.

In the case of orientatable diffuser grilles for motor vehicle air-conditioning systems, a relatively high braking torque, for example comprised between 8 and 12 NW.m, is generally required, and this occurs essentially in order to prevent the vibrations induced by the movement of the vehicle from affecting the orientation operation or from altering the position of orientation in which the grille has been placed.

Currently, as for example is known from GB-A-2 092 221, the braking torque is produced with the aid of elastic means such as pad springs which elastically engage the outer surface of the suspension pivot of the orientatable element, or of elastic pins which are supported by the orientatable element and move with an elastic contact engagement within depressed grooves defined on the fixed support of said element, or of other auxiliary elements which in any case are external to, and separate from, the rotational coupling between the orientatable element and the fixed support which supports and contains it.

These known braking systems all have the disadvantage of a rapid decay of the braking action produced by wear and/or by the effect of temperature, so that they soon become ineffective.

Said systems are furthermore susceptible to jamming or blockage, especially in the not infrequent case of breakage or deformation of said elastic means, with consequent blockage of the orientatable element. In any case, these are complicated solutions which require laborious assembly operations, to the detriment of the manufacturing costs of the diffusers or generic elements which adopt them.

The aim of the present invention is to eliminate the disadvantages encountered in the prior art devices.

Within this aim, an object of the invention is to provide a device for the braked rotational support of orientatable elements, particularly diffuser grilles as specified, which has an extremely simplified structure, has no elastic auxiliary means and is therefore extremely reliable in operation.

A further object of the invention is to provide a device which is suitable for exerting a braking torque which is constant in time and is substantially temperature-independent.

Another object of the present invention is to provide a device which simplifies the assembly operations of the orientatable element, with significant economical advantages for the production costs of the diffusers or similar elements which adopt said device.

In order to achieve the above-mentioned aim and objects, as well as other objects which will become apparent from the following detailed description, the present invention provides a device for the braked rotational support of orientatable elements, particularly for diffuser grilles in motor vehicle air-conditioning systems, characterized in that it comprises at least one articulation roller and at least two juxtaposed flanges which are closely coupled with said roller, each of said flanges having a shaped plate and a cylindrical seat for the forced containment of a respective roller portion, at least one of said plates being adapted to engage in a corresponding seat of the fixed support for the orientatable element, at least one other of said plates being adapted to engage in the corresponding seat of said orientatable element.

Advantageously, according to the invention, the articulation roller is constituted by a bearing roller the diameter whereof is chosen in relation to the required braking torque; the flanges are preferably coupled to the roller by molding in place or in-situ.

Further characteristics and advantages of the invention will become apparent from the following detailed description and with reference to the accompanying drawings, given only by way of non-limitative example, wherein:
figure 1 is a perspective view of the device;
figure 2 is an enlarged and partially sectional perspective view, similar to figure 1;
figure 3 is a perspective view, similar to figure 1, of another embodiment of the device;
figure 4 is a longitudinal sectional view of an orientatable diffuser for motor vehicle air-conditioning systems which includes the device according to the invention;
figure 5 is a partial exploded perspective view of the diffuser of figure 4;
figure 6 is a sectional view taken along the line VI-VI of figure 4.

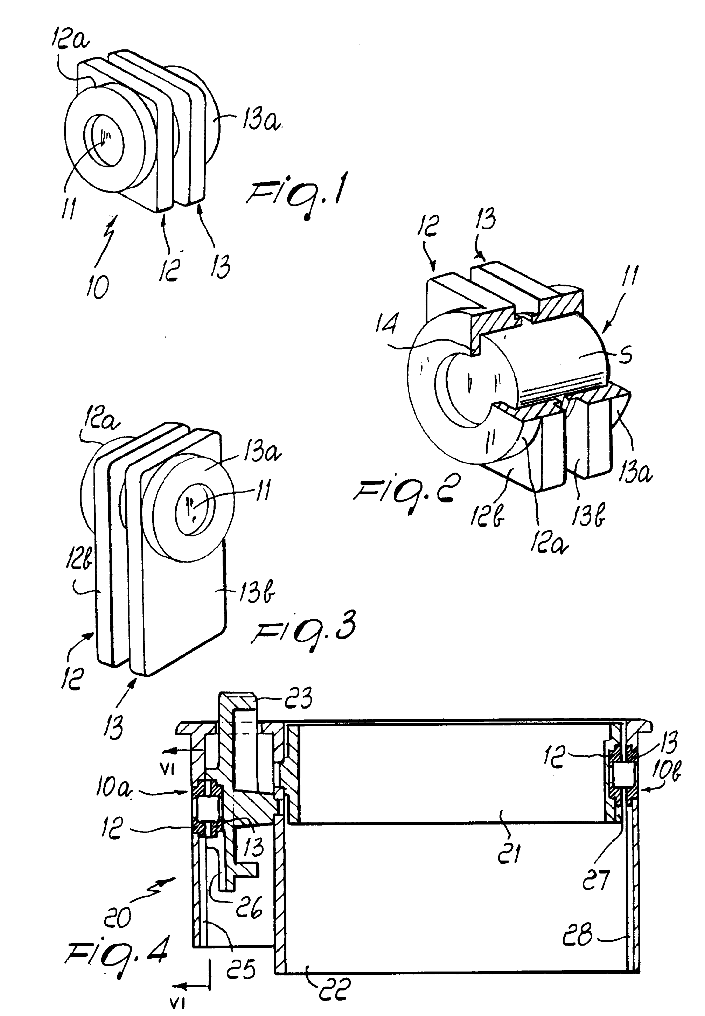

With reference to figures 1 to 3, the reference numeral 10 generally indicates the device which, as clearly shown in the figure, is substantially constituted by an articulation roller 11 and two juxtaposed flanges 12-13 made of polymeric material which are force-fitted onto the articulation roller 11.

In order to achieve the required braking action of the flanges 12-13 with respect to the roller 11, it is necessary that the coupling surface S of said roller be accurately smoothed, for example lapped. This requirement is easily met by adopting rollers 11 used for the manufacture of known roller bearings, the diameter whereof is chosen in relation to the required value of the braking torque.

Each flange 12-13 has a cylindrical seat 12a-13a for the containment of the corresponding roller portion; said seat is preferably provided with an annular axial retention collar 14 and with a plate 12b-13b with a square plan, as shown in figure 1, or with a rectangular plan, as shown in figure 2, but in any case a prism-shaped plan, which is intended to engage in a corresponding prism-shaped seat -- as will be described in greater detail hereinafter -- which is adapted for close rotational association with said plate.

The flanges 12-13 are force-fitted onto the roller 11, for example by driving, but are preferably molded in place or in-situ together with said roller; the process of molding in place, besides ensuring the perfect coupling between the roller 11 and the seats 12a-13a of the flanges, also significantly simplifies the manufacture of the device.

The device 10 is installed by coupling one flange to the fixed support and the other flange to the element which is orientatable with respect to the fixed support.

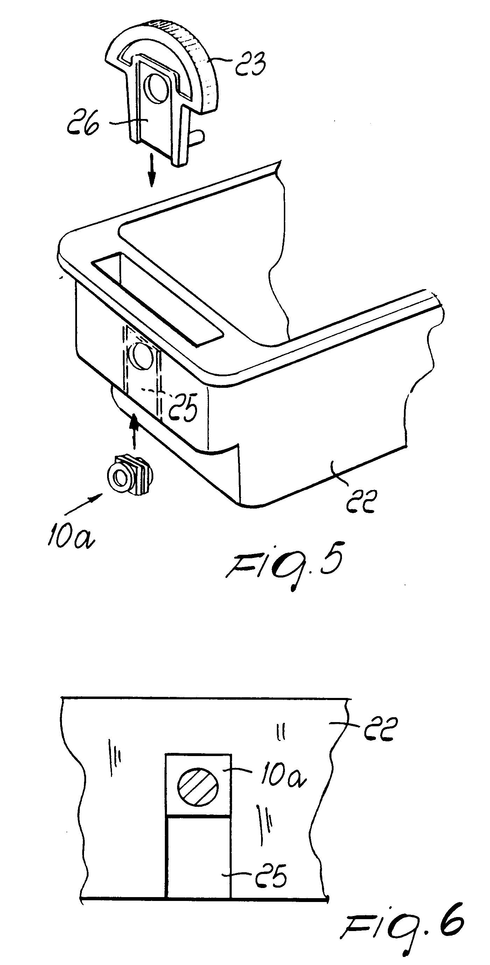

Figures 4 to 6 illustrate an application of the device to a diffuser 20 for motor vehicle air-conditioning systems, of the type which comprises an orientatable grille 21 which is contained in a fixed housing 22 to which the air feed duct (not illustrated) is connected; said housing has a knob 23 for actuating the throttle valve associated with the diffuser, which is not visible in the figure.

In the illustrated example, the diffuser has two rotational support devices according to the invention which are respectively indicated by 10a and 10b; the first device is inserted between the housing 22 and the knob 23, and the second one is inserted between the grille 21 and the housing 22. The flanges 12 and 13 of the device 10a are advantageously accommodated in respective prism-shaped seats 25-26 of the housing 22 and of the knob 23; said seats are open on one side to allow the snap-together assembly of the device, and similarly the flanges 12-13 of the device 10b are accommodated in respective open prism-shaped seats 27-28 of the grille 21 and of the housing 22.

It can be easily understood that the assembly of the devices 10a and 10b is extremely simple, since said devices can be inserted with a slight forcing, by virtue of the elastic deformability of the walls of the housing, in said containment seats of the respective flanges, as indicated by the arrows in figures 5 and 6.

Though the concept of the invention is invariant, the details of execution and the embodiments may naturally be varied extensively with respect to what is described and illustrated by way of non-limitative example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device (10) for rotatably supporting manually orientatable elements (21), particularly for diffuser grilles in motor vehicle air-conditioning systems, characterized in that it comprises at least one articulation roller (11) and at least two juxtaposed flanges (12, 13) which are closely coupled with said roller (11), each of said flanges (12, 13) having a shaped plate (12b, 13b) and a cylindrical seat (12a, 13a) for the forced containment of a respective roller portion, at least one of said plates (12b, 13b) being adapted to engage in a corresponding seat (25, 28) of the fixed support (22) for the orientatable element (21), at least one other plate (12b, 13b) being adapted to engage in the corresponding seat (26, 27) of said orientatable element (21).

2. Device (10) according to claim 1, characterized in that the articulation roller (11) is constituted by a roller for roller bearings and in that the diameter of said roller is proportional to the chosen braking torque.

3. Device (10) according to claims 1 and 2, characterized in that the flanges (12, 13) are coupled to the articulation roller (11) by molding in place.

4. Device (10) according to claims 1 and 2, characterized in that the flanges (12, 13) are coupled to the articulation roller (11) by driving.

5. Device (10) according to claim 1, characterized in that the cylindrical seat (12a, 13a) of the flanges (12, 13) has an annular axial retention collar (14).

6. Diffuser (20) for motor vehicle air-conditioning systems with a fixed housing (22) and an orientatable grille (21), comprising at least one device (10a, 10b) for the braked rotational support of the grille (21), according to claims 1 to 5, comprising at least one open prism-shaped seat (25, 28) defined on the fixed housing (22) and adapted to contain and rotationally couple a flange (12, 13) of the device (10a, 10b) and at least one corresponding open prism-shaped seat (26, 27) on the orientatable grille (21) to engage the other flange (12, 13) of the device (10a, 10b).

7. Device (10) according to claim 1, 2, 3 or 4, characterized in that said articulation roller (11) has a lapped surface.

8. Device (10) according to claim 1, 2, 3, 4 or 7, characterized in that the flanges (12, 13) are force-fitted onto said roller (11).

9. Device (10, 10a, 10b) according to one or more of the preceding claims, characterized in that said plate (12b, 13b) associated with each flange (12, 13) is quadrangular shaped.

10. Device (10) according to claim 1, 4, 5, 6 or 8, characterized in that said flanges (12, 13) are made of polymeric material.

## Patentansprüche

1. Vorrichtung (10) zur Drehlagerung von manuell verstellbaren Elementen (21), insbesondere für verstellbare Luftrichtgitter von Klimaanlagen in Motorfahrzeugen, dadurch gekennzeichnet, daß sie wenigstens eine Drehwelle (11) und wenigstens zwei angrenzende Flansche (12, 13) aufweist, die mit der Welle (11) eng gekoppelt sind, wobei jeder der Flansche (12, 13) eine geformte Platte (12b, 13b) und einen zylindrischen Sitz (12a, 13a) für das kraftschlüssige Fassen eines jeweiligen Wellenteils aufweist, wobei wenigstens eine der Platten (12b, 13b) mit einem entsprechenden Sitz (25, 28) des festen Trägers (22) für das verstellbare Element (21) in Eingriff kommen kann und wenigstens eine andere der Platten (12b, 13b) mit dem entsprechenden Sitz (26,27) des verstellbaren Elements (21) in Eingriff kommen kann.

2. Vorrichtung (10) nach Anspruch 1, dadurch gekennzeichnet, daß die Drehwelle (11) aus einer Rolle für Rollenlager besteht und daß der Durchmesser der Welle proportional zum gewählten Drehmoment ist.

3. Vorrichtung (10) nach Anspruch 1 und 2, dadurch gekennzeichnet, daß die Flansche (12, 13) durch direktes Anspritzen mit der Drehwelle (11) gekoppelt sind.

4. Vorrichtung (10) nach Anspruch 1 und 2, dadurch gekennzeichnet, daß die Flansche (12, 13) durch Auftreiben mit der Drehwelle (11) gekoppelt sind.

5. Vorrichtung (10) nach Anspruch 1, dadurch gekennzeichnet, daß der zylindrische Sitz (12a, 13a) der Flansche (12, 13) einen ringförmigen axialen Haltekragen (14) aufweist.

6. Luftrichter (20) für Klimaanlagen von Motorfahrzeugen mit einem befestigten Gehäuse (22) und einem verstellbaren Gitter (21), mit wenigstens einer Vorrichtung (10a, 10b) für die gebremste Drehhalterung des Gitters (21) nach Anspruch 1 bis 5, mit wenigstens einem offenen, am befestigten Gehäuse (22) definierten, prismenförmigen Sitz (25, 28), der zum Halten und drehbaren Koppeln eines Flanschs (12, 13) der Vorrichtung (10a, 10b) ausgebildet ist, und wenigstens einem entsprechenden offenen, prismenförmigen Sitz (26, 27) am verstellbaren Gitter (21) zum Eingriff mit dem anderen Flansch (12, 13) der Vorrichtung (10a, 10b).

7. Vorrichtung (10) nach Anspruch 1, 2,3 oder 4, dadurch gekennzeichnet, daß die Drehwelle (11) eine geläppte Oberfläche hat.

8. Vorrichtung (10) nach Anspruch 1, 2,3, 4 oder 7, dadurch gekennzeichnet, daß die Flansche (12, 13) in Preßsitz auf die Welle (11) gebracht sind.

9. Vorrichtung (10, 10a, 10b) nach einem oder mehreren der vorhergehenden Ansprüche, dadurch gekennzeichnet, daß die jedem Flansch (12,13) zugeordnete Platte (12b, 13b) von rechteckiger Form ist.

10. Vorrichtung (10) nach Anspruch 1, 4,5,6 oder 8, dadurch gekennzeichnet, daß die Flansche (12,13) aus Kunststoff bestehen

## Revendications

1. Dispositif (10) pour supporter d'une manière rotative des éléments (21) orientables à la main, en particulier pour des grilles de diffuseurs dans des systèmes de climatisation de véhicules à moteur, caractérisé en ce qu'il comporte au moins un rouleau d'articulation (11) et au moins deux flasques juxtaposés (12, 13) étroitement couplés avec ledit rouleau (11), chacun desdits flasques (12, 13) ayant une plaque profilée (12b, 13b) et une portée cylindrique (12a, 13a) pour retenir par serrage une partie respective du rouleau, au moins une desdites plaques (12b, 13b) étant conçue pour venir s'engager dans un logement correspondant (25, 28) du support fixe (22) pour l'élément orientable (21), au moins une autre plaque (12b, 13b) étant conçue pour venir s'engager dans le logement correspondant (26, 27) dudit élément orientable (21).

2. Dispositif (10) selon la revendication 1, caractérisé en ce que le rouleau d'articulation est constitué par un rouleau pour roulements à rouleaux, et en ce que le diamètre dudit rouleau est proportionnel au couple de freinage choisi.

3. Dispositif (10) selon les revendications 1 et 2, caractérisé en ce que les flasques (12, 13) sont couplés au rouleau d'articulation (11) par moulage sur place.

4. Dispositif (10) selon les revendications 1 et 2, caractérisé en ce que les flasques (12, 13) sont couplés par engagement au rouleau d'articulation (11).

5. Dispositif (10) selon la revendication 1, caractérisé en ce que la portée cylindrique (12a, 13a) des flasques (12, 13) a un collet annulaire axial de retenue (14).

6. Diffuseur (20) pour systèmes de climatisation de véhicules à moteur avec un boîtier fixe (22) et une grille orientable (21), comportant au moins un dispositif (10a, 10b) pour le support rotatif freiné de la grille (21) selon les revendications 1 à 5, comportant au moins un logement ouvert (25, 28) en forme de prisme défini sur le boîtier fixe (22) et servant à retenir et coupler d'une manière rotative un flasque (12, 13) du dispositif (10a, 10b) et au moins un logement ouvert (26, 27) en forme de prisme sur la grille orientable (21) pour l'engagement de l'autre flasque (12, 13) du dispositif (10a, 10b).

7. Dispositif (10) selon la revendication 1, 2, 3 ou 4, caractérisé en ce que ledit rouleau d'articulation (11) a une surface rodée.

8. Dispositif (10) selon la revendication 1, 2, 3, 4 ou 7, caractérisé en ce que les flasques (12, 13) sont montés à ajustement serré sur ledit rouleau (11).

9. Dispositif (10, 10a, 10b) selon au moins une des revendications précédentes, caractérisé en ce que ladite plaque (12b, 13b) associée à chaque flasque (12, 13) a une forme quadrangulaire.

10. Dispositif (10) selon la revendication 1, 4, 5, 6 ou 8, caractérisé en ce que lesdits flasques (12, 13) sont en matière polymère.
